# FASCICULE DE BREVET EUROPEEN

(11) **EP 1 968 889 B1**
(45) Date de publication et mention de la délivrance du brevet: **10.08.2011**
(21) Numéro de dépôt: 06847212.5
(22) Date de dépôt: 22.12.2006
(51) Int. Cl.: C01B 31/02, C09C 1/44, C09D 5/24, H01C 1/14, H01G 9/042

(54) **PROCÉDÉ DE SYNTHÈSE DE NANOTUBES DE CARBONE.**
SYNTHESEVERFAHREN FÜR KOHLENSTOFFNANORÖHREN
METHOD FOR SYNTHESIS OF CARBON NANOTUBES

(30) Priorité: 23.12.2005 FR 0513230; 01.02.2006 US 764051 P
(43) Date de publication de la demande: 17.09.2008
(73) Titulaire: ARKEMA FRANCE, 92700 Colombes (FR)
(72) Inventeur: BORDERE, Serge, 64110 Jurançon (FR); GAILLARD, Patrice, 64370 Hagetaubin (FR); BADDOUR, Carole, H2X 3R4 Montréal - Canada (FR)
(74) Mandataire: Lhoste, Catherine
(86) Numéro de dépôt international: PCT/FR2006/051423
(87) Numéro de publication internationale: WO 2007/074312

(56) Documents cités:
- GB-A- 2 002 820
- US-B1- 6 824 086
- HERNADI K ET AL: "SWNTs as catalyst and/or support in the catalytic decomposition of hydrocarbons" CHEMICAL PHYSICS LETTERS, NORTH-HOLLAND, AMSTERDAM, NL, vol. 367, no. 3-4, 6 janvier 2003 (2003-01-06), pages 475-481, XP002279643 ISSN: 0009-2614
- CUONG PHAM-HUU ET AL: "Large scale synthesis of carbon nanofibers by catalytic decomposition of ethane on nickel nanoclusters decorating carbon nanotubes" PHYSICAL CHEMISTRY CHEMICAL PHYSICS, ROYAL SOCIETY OF CHEMISTRY, CAMBRIDGE, GB, vol. 4, no. 3, 1 février 2002 (2002-02-01), pages 514-521, XP002279644 ISSN: 1463-9076
- ALLOUCHE H ET AL: "Chemical vapor deposition of pyrolytic carbon on carbon nanotubes - Part 1. Synthesis and morphology" CARBON, vol. 41, no. 15, 2003, pages 2897-2912, XP004470631 ISSN: 0008-6223

## Description

La présente invention a pour objet un procédé de synthèse de nanotubes de carbone (NTC) par dépôt chimique en phase gazeuse (CVD), mettant en oeuvre un lit fluidisé de catalyseur.

### Technique antérieure

Les nanotubes de carbone sont reconnus aujourd'hui comme des matériaux présentant de grands avantages, du fait de leurs propriétés mécaniques, de leurs rapports de forme (longueur/diamètre) très élevés ainsi que de leurs propriétés électriques.

Ils se composent de feuillets graphitiques enroulés terminés par des hémisphères constitués de pentagones et d'hexagones de structure proche des fullerènes.

On connaît des nanotubes composés d'un seul feuillet : on parle alors de SWNT (acronyme anglais de Single Wall Nanotubes) ou de nanotubes composés de plusieurs feuillets concentriques appelés alors MWNT (acronyme anglais de Multi Wall Nanotubes). Les SWNT sont en général plus difficiles à fabriquer que les MWNT.

La production des nanotubes de carbone peut être mise en oeuvre selon différents procédés comme la décharge électrique, l'ablation laser ou la déposition chimique en phase vapeur (en terminologie anglaise Chemical Vapor Deposition ou CVD)

Parmi ces techniques, la CVD semble être la seule susceptible de pouvoir assurer la fabrication en quantité importante de nanotubes de carbone, condition essentielle pour assurer un prix de revient permettant de déboucher massivement dans les applications polymères et/ou résines utilisées dans diverses industries telles que l'automobile, l'électronique, l'optoélectronique, la protection thermique ou électrique.

Selon cette méthode, on injecte une source de carbone à température relativement élevée sur un catalyseur, ledit catalyseur pouvant être constitué d'un métal supporté sur un solide inorganique. Parmi les métaux, sont cités de manière préférentielle le fer Fe, le cobalt Co, le nickel Ni, le molybdène Mo et parmi les supports ci-après substrat, on retrouve souvent l'alumine, la silice ou la magnésie.

Les sources de carbone envisageables sont le méthane, l'éthane, l'éthylène, l'acétylène, l'éthanol, le méthanol, l'acétone, voire le gaz de synthèse CO + H₂ (procédé HIPCO).

Parmi les documents présentant la synthèse de nanotubes de carbone, on peut citer le document WO 86/03455A1 d'Hyperion Catalysis International Inc. correspondant à EP 225.556 B1 que l'on peut considérer comme l'un des brevets de base sur la synthèse des NTC qui revendique des fibrilles de carbone (ancienne dénomination des NTC) quasi cylindriques dont le diamètre est compris entre 3,5 et 70 nm, le rapport de forme supérieur ou égal à 100 ainsi que leur procédé de préparation.

La synthèse se fait par mise en contact d'un catalyseur contenant du fer (par exemple Fe₃O₄, Fe sur un substrat de charbon, Fe sur un substrat d'alumine ou Fe sur un substrat en fibrille carbonée) avec un composé gazeux contenant du carbone (de préférence CO ou hydrocarbure(s)), avantageusement en présence d'un composé capable de réagir avec du carbone pour produire des produits gazeux, (par exemple CO, H₂ ou H₂O). Dans les exemples, les catalyseurs sont préparés par imprégnation à sec, par précipitation ou par imprégnation en voie humide.

Le document WO 87/07559 correspondant au document EP 270.666 B1 du même déposant revendique un procédé pour fabriquer des fibrilles de diamètre compris entre 3,5 et 70 nm mais de rapport de forme L/D compris entre 5 et 100, à partir des mêmes réactifs et catalyseurs.

Aucune information sur la productivité (qui serait exprimée comme la masse de fibrilles formées par gramme de catalyseur et par unité de temps) n'est donnée hormis le fait qu'il faut travailler, dans le cas où le composé gazeux contenant du carbone est le benzène, à plus de 800°C.

D'autres documents revendiquent des améliorations de procédé, telles que le lit fluidisé continu qui permet de contrôler l'état d'agrégation du catalyseur et des matériaux carbonés formés (voir par exemple le document WO 02/94713A1 au nom de l'Université de Tsinghua) ou des améliorations de produits telles que décrites dans le document WO 02/095097 A1 au nom de Trustees Of Boston College qui prépare des nanotubes de morphologie variée et non alignés, en jouant sur la nature du catalyseur et les conditions de réaction.

Le document US 2001/0036549 A1 d'Hyperion Catalysis International Inc. décrit un procédé amélioré de préparation de NTC par décomposition d'une source de carbone en contact avec un métal de transition multivalent, ou de préférence un mélange de métaux (tel que Fe et Mo, Cr, Mn et/ou Ce), dont l'amélioration consiste en ce que le métal de transition, formant une multiplicité de sites catalytiques de taille comprise entre 3,5 et 70 nm, est supporté par un substrat inorganique de taille inférieure à 400 µm.

Dans les exemples, la source de carbone est un mélange hydrogène/éthylène dont les pressions partielles respectives sont de 0,66 et 0,33, le temps de réaction à 650°C est de 30 minutes et le catalyseur est préparé par imprégnation de nitrate de fer en voie pâte méthanol sur alumine de pyrolyse (taux de fer non donné, estimé à 15 %) ; la productivité est de 6,9 g/g en 30 minutes tandis qu'elle atteint entre 10,9 et 11,8 lorsque du sel de molybdène est ajouté, pour des taux de fer de l'ordre de 9 à 10% et de molybdène de 1 à 2%. Quand le co-métal est le cérium, le chrome, le manganèse, la productivité en nanotubes est respectivement de 8, 3, 9, 7 et 11.

On constate aussi que l'acétylacétonate de fer est moins efficace que le nitrate de fer.

Dans l'exemple 16, l'imprégnation est faite en voie aqueuse par précipitation à pH sensiblement égal à 6 par ajout simultané de solutions de nitrate de fer et de bicarbonate de sodium. Le catalyseur conduit à une sélectivité de 10,5 pour un taux de fer de 15 % et une introduction en semi-continu dans le réacteur.

Un autre exemple par imprégnation en voie aqueuse de fer et de molybdène conduit à des résultats aussi bons que la voie méthanol.

Ce document montre aussi que le remplacement du fer par le molybdène à des teneurs supérieures à 2,5 % en Mo est plutôt défavorable puisqu'une productivité de 8,8 est atteinte en 30 minutes pour un mélange à proportions égales de Fe et Mo (total = 16,7%).

Toujours dans ce document US 2001/0036549 A1, on constate, lorsqu'on utilise un substrat non poreux tel que l'alumine de pyrolyse vendue par Degussa de surface spécifique = 100 m²/g, qu'il est difficile d'imprégner de grandes quantités de fer car seule la couche externe est accessible au gaz et les couches inférieures n'auront pas d'action catalytique suffisante.

De plus, la technique utilisant ce genre de substrat est compliquée puisque la taille des particules est de 20 nm et la densité en vrac est de 0,06, ce qui augmente la difficulté de mise en oeuvre industrielle.

D'une manière générale, les procédés de synthèse de NTC selon la technique CVD consistent à mettre en contact, à une température comprise entre 500 et 1500 °C, une source de carbone avec un catalyseur, en général sous forme de grains de substrat recouvert de métal, mis en lit fluidisé. Les NTC synthétisés se « fixent » sur les grains de substrat catalytique sous forme d'un réseau tridimensionnel enchevêtré, formant des agglomérats de d50 supérieur à la centaine de µm, typiquement de l'ordre de 300 à 600 µm. Le d50 représente le diamètre apparent de 50% de la population des agglomérats. Les NTC ainsi obtenus peuvent être utilisés tels quels dans la plupart des applications; mais il est également possible de les soumettre à une étape supplémentaire ultérieure de purification, destinée à séparer les NTC des grains du substrat catalytique et également à diminuer la taille des agglomérats de NTC.

Hernardi et al. disclose in "SWMTs as catalyst and/or support in the catalytic decomposition of hydrocarbons", Chem. Phys. Lett. 367, (2003), 475-481, the préparation of MWNTs by CVD on a substrate made of SWNTs containing metallic particles and optionally further impregnated with transition metals.

Quelque soit le catalyseur utilisé, on constate que la synthèse des NTC par CVD conduit à une limite de productivité du catalyseur, que l'on peut exprimer par le rapport NTC formés / catalyseur mis en jeu. Cette limite est par exemple atteinte lorsque tous les sites catalytiques disponibles ont réagi et/ou lorsque l'enchevêtrement des NTC autour du substrat réduit la diffusion des gaz réactifs (de la source de carbone) vers les sites catalytiques ainsi que la surface de catalyseur qui peut réagir.

Le procédé de synthèse des NTC, objet de la présente invention, permet d'obtenir des NTC de plus grande pureté tout en améliorant significativement la productivité du catalyseur mis en oeuvre, de limiter la formation d'agglomérats de NTC de taille supérieure à 200 µm et/ou de réduire leur nombre et ce, sans nécessiter d'étape supplémentaire de purification.

Selon l'invention, le terme pureté signifie le rapport (quantité de NTC formés)/( quantité de NTC formés +quantité de catalyseur introduit), le catalyseur étant constitué du métal supporté sur un solide organique. Grâce au procédé selon l'invention, on obtient des NTC contenant plus de 93 % de carbone.

### Description détaillée de l'invention

Le procédé de synthèse de NTC selon l'invention consiste en :
a/ la mise en contact, à une température comprise entre 500 et 1500 °C, d'une première source de carbone avec un catalyseur neuf, de préférence mis en lit fluidisé, comprenant au moins un (un ou plusieurs) métal de transition multivalent, de préférence recouvrant des grains de substrat poreux tel que de l'alumine, permettant l'obtention, par dépôt chimique en phase vapeur (ou CVD), de NTC sous forme de réseau tridimensionnel enchevêtré autour de particules de catalyseur ou agglomérats de NTC, de d50 compris entre 300 et 600 µm,
b/ le broyage d'au moins une partie des agglomérats de NTC (réseau tridimensionnel enchevêtré de NTC autour de particules de catalyseur) issus de l'étape a/, de telle sorte que le d50 des agglomérats à l'issue du broyage soit compris entre 10 et 200 µm, de référence entre 50 et 150 µm, de préférence proche de 100 µm ou encore de préférence proche, voisin de 50 µm,
c/ la mise en fluidisation du produit broyé issu de l'étape b/, à une température comprise entre 500 et 1500 °C, en présence d'une seconde source de carbone en vue de l'obtention d'aggloméarts de NTC (réseau tridimensionnel enchevêtré de NTC), éventuellement en présence de catalyseur neuf,
d/ éventuellement le broyage, selon les conditions opératoires de l'étape b/, d'au moins une partie des NTC formés lors de l'étape c/,
e/ la récupération des NTC issus de l'étape c/ ou d.

Selon l'invention, l'expression « compris entre » couvre aussi les bornes.

On entend par catalyseur neuf, un catalyseur utilisé pour la première fois, en d'autres termes, un catalyseur non régénéré.

Selon l'invention, la première et la seconde sources de carbone peuvent être identiques ou différentes en termes de nature chimique et/ou de débit.

La ou les sources de carbone peuvent être choisies parmi tout type de matériau carboné tel que le méthane, l'éthane, le propane, le butane, l'hexane, le cyclohexane ou tout autre alcane aliphatique supérieur comprenant un nombre de carbone supérieur à 4, l'éthylène,le propylène, le butène, l'isobutène, ou tout autre alcène aliphatique supérieur comprenant un nombre de carbone supérieur à 4, le benzène, le toluène, le xylène, le cumène, l'éthyl benzène, le naphtalène, le phénanthrène, l'anthracène, l'acétylène ou tout autre alcyne supérieur comprenant un nombre de carbone supérieur à 4, le formaldéhyde, l'acétaldéhyde, l'acétone, le méthanol, l'éthanol, le monoxyde de carbone, etc, seuls ou en mélange.

L'étape de broyage b/ a pour but de désagglomérer le réseau tridimensionnel enchevêtré NTC sur catalyseur, réduire sa granulométrie et rendre accessibles des sites catalytiques actifs dudit catalyseur.

L'étape de broyage b/ peut être mise en oeuvre à froid ou à chaud et être réalisée selon les techniques connues dans des appareils tels que le broyeur à boulets, à marteaux, à meules, à couteaux, à jet de gaz ou tout autre système de broyage susceptible de réduire la taille du réseau enchevêtré de NTC, tout en permettant sa mise en oeuvre ultérieure (étape c/) selon une technique de CVD en lit fluidisé. Ainsi, à la suite de cette étape de broyage b/, les agglomérats de NTC présentent un d50 supérieur à 10 µm, compris entre 10 et 200 µm, de préférence compris entre 50 et 150 µm et encore plus préférentiellement proche de 100µm. La mise en fluidisation n'est pas possible si le d50 des agglomérats de NTC à l'issue de l'étape de broyage b/ est inférieur à 10 µm.

De manière préférentielle, l'étape b/ de broyage est pratiquée selon une technique de broyage par jet de gaz. Les gaz utilisés comme apport d'énergie peuvent avantageusement être les gaz réactifs utilisés pour la synthèse des NTC.

La présente invention va être maintenant illustrée par des exemples particuliers de réalisation ne visant, en aucun cas, à limiter la portée de la présente invention, en référence aux figures annexées, dans lesquelles :
La Figure 1 est une vue au microscope électronique à balayage des NTC obtenus selon l'art antérieur.
La Figure 2 est une vue au microscope électronique à balayage des NTC broyés obtenus à l'issue de l'étape b/ selon l'invention.
La Figure 3 illustre un dispositif de broyage qui peut être installé au sein même d'un réacteur de synthèse (6) de NTC par CVD (broyage pratiqué in-situ), soit dans une boucle externe permettant le recyclage éventuel, total ou partiel des NTC broyés au sein du réacteur (broyage ex-situ).

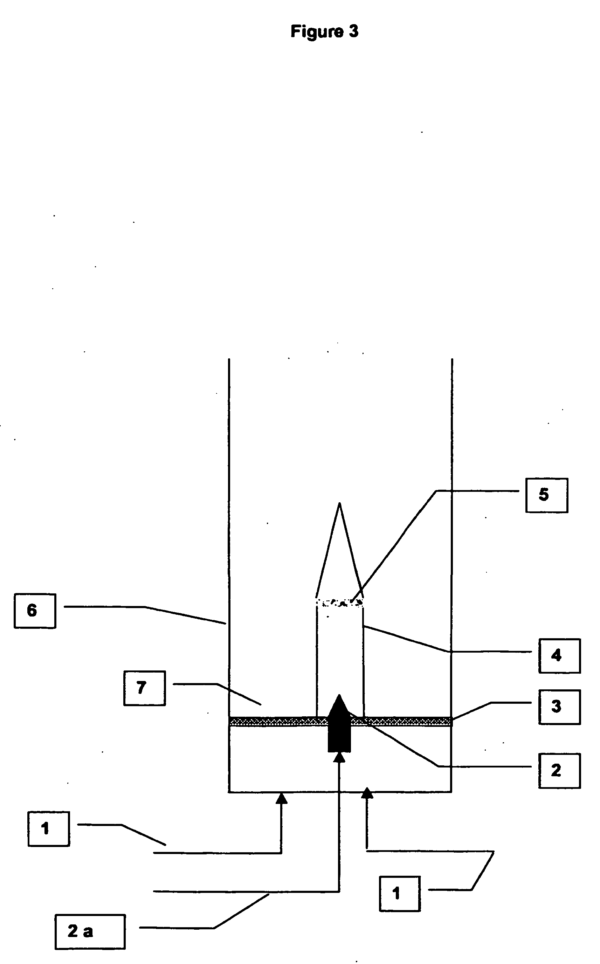

Le dispositif de broyage représenté à la Figure 3 comprend un système de jets de gaz à grande vitesse générés au travers d'injecteurs (2) qui entraînent la poudre de NTC sur une ou plusieurs cibles (5) maintenues par un support (4) devant être soumises au bombardement des agglomérats de NTC, permettant ainsi de réduire la granulométrie par impact. La fluidisation peut être réalisée par ces seuls injecteurs(2) et/ou associée à un flux gazeux diffusé par le distributeur (3) autour de ces injecteurs (2). Les dimensions du système de broyage et les débits d'entrée de gaz (1) et (2a) utilisés sont adaptés pour obtenir une bonne fluidisation et la granulométrie désirée, suivant la dureté et la densité du substrat catalytique. Le distributeur (3) est destiné à supporter le catalyseur, qui est sous forme de poudre, au temps T₀ de la synthèse.

La forme du dispositif de broyage sera avantageusement adaptée selon les matériaux utilisés et/ou le comportement du lit fluidisé.

Le procédé selon l'invention peut être mis en oeuvre en semi-continu ou en batch ou de préférence en continu.

Au moins une partie du réseau enchevêtré de NTC/catalyseur issue de l'étape a/ peut être extraite du réacteur de synthèse vers un dispositif de broyage opérant en continu, semi-continu ou en batch, puis injectée (étape c/) soit dans le même réacteur de synthèse de l'étape a/, soit dans un second réacteur de synthèse de NTC par CVD en lit fluidisé (réacteur de finition).

On peut aussi réaliser le broyage (étape b/) dans le réacteur de synthèse de l'étape a/, pourvu de moyens de broyage tel que représenté par le dispositif de la Figure 3, qui évite d'extraire la poudre du réacteur et donc limite les pertes de charges, les risques d'envolement des poudres.

Ainsi, selon un mode de l'invention, l'étape b/ est réalisée à l'intérieur du réacteur de synthèse (6) de NTC par injection d'une partie du ou des gaz réactifs et/ou d'un gaz d'appoint au travers de buses d'injection (2) réparties sur la surface du distributeur (3), le ou les jets de gaz verticaux (1) entraînant les particules vers une cible (5) ; les particules sont constituées d'agglomérats de NTC et /ou de catalyseur. La cible (5) se présente sous forme d'un cône, en acier inoxydable, permettant d'éviter le dépôt de particules au sommet de la cible (5).

Ce broyage rend accessible des sites catalytiques de croissance de NTC ; ceci permet, lors de l'étape c/ de faire croître de nouveaux NTC sur ces sites rendus accessibles mais aussi sur les agglomérats de NTC formés au cours de l'étape a/ dont la taille et/ou le nombre ont été réduits grâce au broyage. La croissance des NTC lors de l'étape a/ et de l'étape c/ peut être assurée avec des sources de gaz identiques (ce qui est le cas lors d'un procédé mettant en jeu un broyage in situ) ou avec des sources différentes tarit en nature qu'en débit (ce qui est, notamment, le cas lors d'un procédé mettant en jeu un broyage ex situ).

Les NTC synthétisés lors de l'introduction de gaz de synthèse et de catalyseur neuf, lors de l'étape c/, peuvent être soumis à une nouvelle étape d/ de broyage selon des conditions décrites précédemment

Les NTC ainsi obtenus après l'étape c/ ou d/ sont finalement récupérés.

Ces NTC présentent des propriétés améliorées, notamment de dispersion dans un matériau notamment polymère. Il est ainsi possible d'introduire une quantité plus élevée de NTC par rapport à l'art antérieur, avec une meilleure répartition et/ou homogénéité, ce qui améliore les propriétés finales du matériau contenant les NTC.

Ces NTC peuvent être utilisés dans toutes les applications où les NTC sont mis en oeuvre, notamment dans des domaines où leurs propriétés électriques sont recherchées (selon la température et leur structure, ils peuvent être conducteurs, semi-conducteurs ou isolants), et/ou dans des domaines où leurs propriétés mécaniques sont recherchées, par exemple pour le renfort des matériaux composites (les NTC sont cent fois plus résistants et six fois plus légers que l'acier) et électromécanique (ils peuvent s'allonger ou se contracter par injection de charge). On peut par exemple citer l'utilisation de NTC dans des compositions macromoléculaires destinées par exemple à l'emballage de composants électroniques, à la fabrication de conduites de carburant (essence ou diesel) (fuel line), de revêtements (coating)antistatiques, dans des thermistors, des électrodes dans le secteur de l'énergie notamment, pour des supercapacités, etc.

### Exemples

### Exemple 1 (comparatif - préparation de NTC par CVD selon l'art antérieur : étape a/ uniquement)

On prépare un catalyseur à 35 % de fer par imprégnation d'une solution de nitrate de fer sur une alumine gamma Puralox SCCA 5-150 de diamètre médian égal à environ 85 µm ; l'imprégnation est réalisée en lit fluidisé sous flux d'air à 100 °C pour garder la poudre sèche tout au long de l'opération. On introduit 300 g de ce catalyseur en couche dans un réacteur de 25 cm de diamètre et 1 m de hauteur efficace, équipé d'un désengagement destiné à éviter l'entraînement de fines particules (catalyseur) vers l'aval. On chauffe à 300 °C sous azote 40 min, puis sous hydrogène et azote (20%180% vol./vol.) en augmentant la température jusqu'à 650 °C durant 75 min. A cette température, on met un débit d'éthylène de 3000 NL/h et un débit d'hydrogène de 1000 NL/h, ce qui correspond à une pression partielle en éthylène de 0,75.

Lorsque l'éthylène n'est plus consommé, on ne produit plus de NTC ; l'éthylène et l'hydrogène sont alors remplacés par un balayage à l'azote.

1 g de catalyseur permet d'obtenir 15 g de NTC. La production de NTC est donc de 15 ), soit une pureté de 93 % en carbone (15/(15+1)).

La mesure granulométrique des agglomérats de NTC donne un d50 de 420 µm. (soit une couche de l'ordre de 150 µm de NTC à la surface du catalyseur, le diamètre médian du catalyseur (substrat alumine +Fe) étant égal à environ 85 µm).

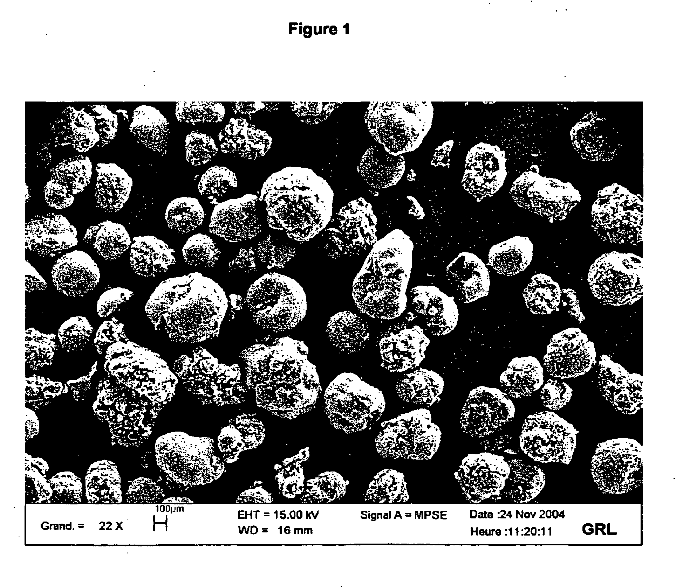

Sur la figure 1, on observe de nombreux agglomérats de taille largement supérieure à 200 µm.

### Exemple 2 (selon l'invention - broyage ex situ )

Le produit obtenu selon l'exemple 1 est soumis à un broyage à jet d'air tangentiel dans un appareil commercialisé par la société Alpine sous la dénomination Spiral jet mill 50 AS.

Le débit de gaz et la durée d'injection sont réglés pour réduire les agglomérats obtenus selon l'exemple 1 à un d50 égal à 40 µm.

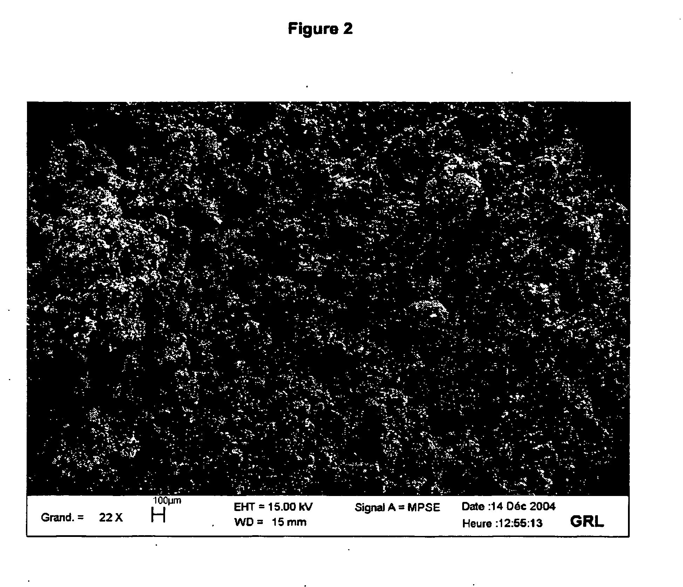

Un échantillon de 5 g de ce produit broyé est introduit, dans un réacteur de 5 cm de diamètre, et selon les conditions de synthèse de NTC de l'exemple 1 avec un ratio volumique éthylène/hydrogène de 3/1.
En comparant la figure 2 à la figure 1, on constate clairement que le procédé selon l'invention conduit à un nombre très limité d'agglomérats de NTC de diamètre supérieur à 200 µm. Le produit final ainsi formé est alors plus facilement dispersé au sein d'un matériau, notamment polymère

On récupère en fin de synthèse 6,4 g de produit final, soit un gain de 28 % par rapport à la quantité de produit introduit (6,4-5)/5*100).. La production de NTC est donc de 19,2 (1 g de catalyseur permet d'obtenir 19,2 g de NTC), soit une pureté de 95 % en carbone (19,2/(19,2+1).

### Exemple 3 (selon l'invention - broyage in-situ )

Le produit obtenu selon l'exemple 1 est soumis à un broyage à jet d'air directement dans le réacteur de synthèse selon la Figure 3 ci-jointe.

Le broyage est réalisé à température ambiante dans le réacteur de synthèse de NTC (6) qui est un tube vertical de 5 cm de diamètre muni d'un distributeur poreux (3) équipé d'une buse (2) permettant l'introduction de gaz à haute vitesse. Le milieu (7) est fluidisé grâce à un courant d'azote (1) traversant le distributeur et un second courant (2a) passant par la buse (2).

Le débit de gaz et la durée d'injection sont réglés pour réduire les agglomérats obtenus selon l'exemple 1 à un d50 égal à 40 µm.

Le produit final ainsi obtenu peut être dispersé facilement et de façon homogène dans un matériau polymérique, en vue d'en modifier ses propriétés mécaniques, électriques, et/ou thermiques.

## Revendications

1. Procédé de synthèse de nanotubes de carbone consistant en :
a/ la mise en contact, à une température comprise entre 500 et 500 °C, d'une première source de carbone avec un catalyseur neuf, comprenant au moins un métal de transition multivalent permettant l'obtention, par dépôt chimique en phase vapeur (CVD) de NTC sous forme de réseau tridimensionnel enchevêtré autour de particules de catalyseur ou d'agglomérats de d50 compris entre 300 et 600 µm,
b/ le broyage d'au moins une partie des agglomérats issus de l'étape a/ de telle sorte que le d50 des agglomérats à l'issue du broyage soit compris entre 10 et 200 µm,
c/ la mise en fluidisation du produit broyé issu de l'étape b/, à une température comprise entre 500 et 1500 °C, en présence d'une deuxième source de carbone en vue de l'obtention d'agglomérats, éventuellement en présence de catalyseur neuf,
d/ éventuellement, le broyage selon les conditions opératoires de l'étape b/ d'au moins une partie des NTC formés lors de l'étape c/,
e/ la récupération des NTC issus de l'étape c/ ou d/.

2. Procédé selon la revendication 1, **caractérisé en ce que** les sources de carbone sont de même nature chimique et débit,

3. Procédé selon la revendication 1 ou 2, **caractérisé en ce que** le catalyseur est mis en lit fluidisé.

4. Procédé selon l'une des revendications précédentes, **caractérisé en ce que** le métal de transition recouvre des grains de substrat poreux.

5. Procédé selon l'une des revendications précédentes, **caractérisé en ce qu'**il fonctionne en continu.

6. Procédé selon l'une des revendications précédentes, **caractérisé en ce que** l'étape b/ est réalisée à l'intérieur du réacteur dé synthèse de NTC (broyage in-situ).

7. Procédé selon l'une des revendications précédentes, **caractérisé en ce que** l'étape b/ est réalisée à l'intérieur du réacteur de synthèse (6) de NTC par injection d'une partie du ou des gaz réactifs et/ou d'un gaz d'appoint au travers de buses d'injection (2) réparties sur la surface du distributeur (3), les jets de gaz verticaux (1) entraînant les particules vers une cible (5).

8. Procédé selon l'une des revendications 1 à 5, **caractérisé en ce que** l'étape b/ est réalisée à l'extérieur du réacteur de synthèse (broyage ex-situ).

9. Utilisation du produit obtenu selon le procédé conforme à l'une quelconque des revendications précédentes, comme agent d'amélioration des propriétés mécaniques et/ou de conductivité électrique, notamment dans des compositions à base de polymères.

10. Utilisation du produit obtenu selon le procédé conforme à la revendication 7, dans des conduites de carburants (fuels-lines), des revêtements (coatings) antistatiques, des thermistors, des électrodes pour supercapacités.

## Claims

1. A process for synthesizing carbon nanotubes, consisting in:
a) bringing a first carbon source into contact, at a temperature between 500 and 1500°C, with a fresh catalyst comprising at least one multivalent transition metal, for obtaining, by chemical vapor deposition (CVD), CNTs in the form of an entangled three-dimensional network around catalyst particles or agglomerates with a d₅₀ lying between 300 and 600 µm;
b) milling at least some of the agglomerates resulting from step a) in such a way that the d₅₀ of the agglomerates obtained from the milling operation lies between 10 and 200 µm;
c) fluidizing the milled product from step b) at a temperature lying between 500 and 1500°C in the presence of a second carbon source with a view to obtaining agglomerates, optionally in the presence of fresh catalyst.
d) optionally, milling, under the operating conditions of step b), at least some of the CNTs formed in step c); and
e) recovering the CNTs resulting from step c) or d).

2. The process as claimed in claim 1, **characterized in that** the carbon sources are of the same chemical nature and have the same flow rate.

3. The process as claimed in claim 1 or 2, **characterized in that** the catalyst is in fluidized bed form.

4. The process as claimed in one of the preceding claims, **characterized in that** the transition metal covers porous substrate particles.

5. The process as claimed in one of the preceding claims, **characterized in that** it operates continuously.

6. The process as claimed in one of the preceding claims, **characterized in that** step b) is carried out inside the CNT synthesis reactor (*in situ* milling).

7. The process as claimed in one of the preceding claims, **characterized in that** step b) is carried out inside the CNT synthesis reactor (6) by injecting some of the reactive gas or gases and/or an additional gas through injection nozzles (2) distributed over the surface of the distributor (3), the vertical gas jets (1) entraining the particles toward a target (5).

8. The process as claimed in one of claims 1 to 5, **characterized in that** step b) is performed outside the synthesis reactor (ex situ milling)..

9. Use of the product obtained by the process as defined in any of the preceding claims, as agents for improving the mechanical and/or electrical conductivity properties, especially in polymer-based compositions.

10. Use of the product obtained by the process as defined in claim 7 in fuel lines, antistatic coatings, thermistors and electrodes for supercapacitors,

## Patentansprüche

1. Verfahren zur Herstellung von Kohlenstoff-Nanoröhren, das darin besteht:
a/ bei einer Temperatur im Bereich von 500 bis 1500 °C eine erste Kohlenstoffquelle mit neuem Katalysator in Kontakt zu bringen, der zumindest ein mehrwertiges Übergangsmetall umfasst, sodass durch chemische Gasphasenabscheidung (CVD) CNT in Form eines um die Katalysatorpartikel verflochtenen, dreidimensionalen Netzes oder Agglomerate mit d50 im Bereich von 300 bis 600 µm gebildet werden können;
b/ zumindest einen Teil der Agglomerate aus Sehritt a/ so zu zerkleinerm, dass nach der Zerkleinerung der Wert d50 der Agglomerate im Bereich von 10 bis 200 µm liegt;
c/ das zerkleinerte Produkt aus Schritt b/ bei einer Temperatur im Bereich von 500 bis 1500 °C in Gegenwart einer zweiten Kohknstoffquelle gegebenenfalls in Gegenwart von neuem Katalysator, zu fluidisieren, um Agglomerate zu bilden;
d/ gegebenenfalls zumindest einen Teil der in Schritt c/ gebildeten CNT unter den Verfahrensbedingungen des Schrittes b/ zu zerkleinern;
e/ die CNT aus Schritt c/ oder d/ zu gewinnen.

2. Verfahren nach Anspruch 1, **dadurch gekennzeichnet, dass** die Kohlenstoffquellen in Bezug auf chemische Natur und Durchsatz gleich sind.

3. Verfahren nach Anspruch 1 oder 2, **dadurch gekennzeichnet**, das der Katalysator in einem Flißbett vorliegt.

4. Verfahren nach einem der vorhergehenden Ansprüche, **dadurch gekennzeichnet, dass** das Übergangsmetall poröse Substratkörner bedeckt,

5. Verfahren nach einem der vorhergehenden Ansprüche, **dadurch gekennzeichnet, dass** es kontinuierlich geführt ist.

6. Verfahren nach einem der vorhergehenden Ansprüche, **dadurch gekennzeichnet, dass** Schritt b/ im Innern des GNT-Synthesereaktors durchgeführt wird (in situ Zerkleinerung),

7. Verfahren nach einem der vorhergehenden Ansprüche, **dadurch gekennzeichnet**, das Schritt b/ im Innern des CNT-Synthesereaktors (6) durchgeführt wird, indem ein Teil des oder der Reaktionsgase und/oder eines Trägergases durch Einspritzdüsen (2), die an der Oberfläche des Verteilers (3) verteilt sind, eingespritzt werden, wobei die vertikalen Gasströme (1) die Partikel in Richtung eines Ziels (5) mitführen.

8. Verfahren nach einem der Ansprüche 1 bis 5, **dadurch gekennzeichnet, dass** Schritt b/ außerhalb des CNT-Synthesereaktors durchgeführt wird (ex situ Zerkleinerung).

9. Verwendung des gemäß dem Verfahren nach einem der vorhergehenden Ansprüche hergestellten Produktes als Mittel zur Verbesserung der mechanischen Eigenschaften und/oder der elektrischen Leitfähigkeit insbesondere in Zusammensetzungen auf der Basis von Polymeren.

10. Verwendung des gemäß dem Verfahren nach Anspruch 7 hergestellten Produktes in Treibstoffleitungen (Fuel Lines), antistatischen Beschichtungen (Coatings), Thermistoren, Elektroden für Superkapazitäten.
